# EUROPÄISCHE PATENTSCHRIFT

(11) **EP 3 394 338 B1**
(45) Veröffentlichungstag und Bekanntmachung des Hinweises auf die Patenterteilung: **08.01.2020**
(21) Anmeldenummer: 17701484.2
(22) Anmeldetag: 25.01.2017
(51) Int. Cl.: D21B 1/32, D21B 1/34, B02C 18/00

(54) **VORRICHTUNG UND VERFAHREN ZUM VERARBEITEN EINES IN EINEM STOFFLÖSER GEBILDETEN ZOPFS**
APPARATUS AND METHOD FOR PROCESSING A ROPE FORMED IN A PULPER
PROCÉDÉ ET DISPOSITIF DE TRAITEMENT D'UN TORON FORMÉ DANS UN PULPEUR

(30) Priorität: 01.02.2016 DE 102016101712
(43) Veröffentlichungstag der Anmeldung: 31.10.2018
(60) Teilanmeldung: 18208999.5
(73) Patentinhaber: MERI Environmental Solutions GmbH, 81673 München (DE)
(72) Erfinder: MENKE, Lucas, 81545 München (DE); WÜNSCHE, Gisbert, 88255 Baienfurt (DE)
(74) Vertreter: Henkel & Partner mbB
(86) Internationale Anmeldenummer: PCT/EP2017/051505
(87) Internationale Veröffentlichungsnummer: WO 2017/133940

(56) Entgegenhaltungen:
- EP-A1- 0 493 715
- WO-A1-2010/026295
- WO-A1-2012/062563
- DE-U1- 9 108 230

## Beschreibung

Die vorliegende Erfindung betrifft eine Vorrichtung und ein Verfahren zum Verarbeiten eines in einem Stofflöser gebildeten Zopfs mit einer Fördereinrichtung, insbesondere Winde, zum Ziehen des Zopfs mit seinem vorderen Ende voran aus dem Stofflöser.

Stofflöser werden zum Auflösen von Altpapier, Zellstoff, Karton, Pappe oder dergleichen eingesetzt und auch als Pulper bezeichnet. Ein Stofflöser weist normalerweise einen bottichartigen Behälter auf, der mit einem Lösungsmittel, wie zum Beispiel Wasser, gefüllt wird. Anschließend wird z.B. Altpapier eingebracht und mit dem Lösungsmittel intensiv vermischt, um es aufzulösen. Zum Vermischen kommt meist ein am Behälterboden des Stofflösers angeordneter Misch- und Zerkleinerungsrotor zum Einsatz.

Um die mit dem Altpapier eingetragenen Störstoffe und Verunreinigungen zu entfernen, wird in den Pulper üblicherweise ein Zopf, nämlich ein beispielsweise seilartiges Drahtbündel, gehängt. Am Zopf verspinnen sich vor allem grobe, längliche Verunreinigungen, wie zum Beispiel Folien, Packbänder oder Textilreste, die durch Herausziehen des Zopfs aus dem Behälter entfernt werden.

In der WO 2012/062563 A1 wird ein Verfahren zur Steuerung einer Zopfwinde, die einen von Verunreinigungen gebildeten Zopf aus einem Stofflöser fördert, beschrieben. Nachgeordnet zur Zopfwinde ist eine Trenneinrichtung vorgesehen, die den Zopf in einzelne Stücke schneidet.

In der EP 0 493 715 A1 wird ein Verfahren zum Aufbereiten von Altpapier beschrieben, bei dem das Altpapier in Wasser suspendiert und unter Einwirkung von Agitationsmitteln weitgehend zerfasert wird, wobei der aus einzelnen Trennstufen anfallende Fremdstoff einer separaten Aufbereitung unterworfen wird, bei welcher der Fremdstoff in wässriger Suspension in mehreren Schritten zerkleinert und desintegriert wird, bevor die Suspension in eine Faserstoff enthaltende Fraktion und eine nicht disintegrierbare Reststoffe enthaltende Fraktion aufgetrennt wird und die Reststoffraktion zur Isolierung und Wiederverwertung von darin enthaltenen Thermoplasten aufbereitet wird.

Aus der WO 2010/026295 A1 ist ein Verfahren zum Steuern der Handhabung von Rejekt in einem Pulperprozess bekannt, bei dem ein Pulper zur Herstellung einer Faserstoffsuspension und eine Zopfwinde zur Entfernung von Rejekt von dem Pulper in der Form eines Windenzopfs vorgesehen ist.

In der DE 91 08 230 wird ein Schredder zum Zerkleinern von Gegenständen mit zwei Wellen offenbart, die parallel zueinander mit Abstand angeordnet sowie gegenläufig antreibbar sind und die jeweils ein unrundes Querschnittsprofil aufweisen.

Aus dem Stand der Technik ist es ferner bekannt, derartige Zopfstücke in Containern zu sammeln, um sie zu einer externen Aufbereitungsanlage zu liefern, wo sie weiterverarbeitet werden. Dabei werden die einzelnen Zopfstücke einer Zerkleinerungsvorrichtung, wie beispielsweise einem Schredder, zugeführt, in dem sie zerkleinert bzw. geschreddert werden. Das geschredderte Material kann anschließend in Metall- und Kunststoffteile und anderweitige Teile getrennt werden.

Die Handhabung von Zopfstücken ist gefährlich, da es sich hierbei um Drahtgespinste handelt, an denen sich Personen leicht verletzen können. Außerdem ist der Transport derartiger Zopfstücke aufwändig und mit zusätzlichen Kosten verbunden.

Der vorliegenden Erfindung liegt daher die Aufgabe zugrunde, eine insbesondere logistisch einfache und kostengünstige Möglichkeit zur Verarbeitung eines in einem Stofflöser gebildeten Zopfs bereitzustellen.

Erfindungsgemäß wird diese Aufgabe durch eine Vorrichtung mit den Merkmalen des Anspruchs 1 bzw. durch ein Verfahren mit den Merkmalen des Anspruchs 14 gelöst.

Erfindungsgemäß umfasst eine Vorrichtung zum Verarbeiten eines in einem Stofflöser gebildeten Zopfs eine Fördereinrichtung, insbesondere Winde, zum Ziehen des Zopfs mit seinem vorderen Ende voran aus dem Stofflöser, wobei die Fördereinrichtung so angeordnet und ausgestaltet ist, dass der Zopf mit seinem vorderen Ende voran mittels der Fördereinrichtung direkt einem Schredder zuführbar ist, und, wobei der Schredder ein 2-Wellen-Schredder ist.

Bei der erfindungsgemäßen Vorrichtung wird somit der Zopf mittels der Fördereinrichtung nicht nur aus dem Stofflöser gezogen, um dann in kleine Stücke geschnitten zu werden, die dann aufbereitet werden. Vielmehr wird der Zopf bei der erfindungsgemäßen Vorrichtung aus dem Stofflöser gezogen und unmittelbar mit seinem vorderen Ende voran zu einem Schredder geführt. Zwischenschritte, wie sie aus dem Stand der Technik zwingend eingesetzt werden, also insbesondere das Abtrennen von einzelnen Zopfstücken am vorderen Ende, das Sammeln der Zopfstücke in Containern, der Transport der Zopfstücke zu einer externen Aufbereitungsanlage und/oder eine wie auch immer geartete Handhabung der Zopfstücke durch eine Bedienperson, werden somit bei der erfindungsgemäßen Vorrichtung vermeiden. Die Verarbeitung eines in einem Stofflöser gebildeten Zopfs kann somit deutlich einfacher, schneller, kosteneffizienter und in sicherer Weise erfolgen.

Unter direkter Zuführung des Zopfes zu dem Schredder wird im Sinne der vorliegenden Erfindung insbesondere verstanden, dass der Zopf unmittelbar von der Fördereinrichtung dem Schredder zugeführt wird, dass also gewissermaßen eine räumlich kontinuierliche Förderung des Zopfes vom Stofflöser zum Schredder erfolgt, ohne dass der Zopf dazwischen in einzelne Stücke durchtrennt oder anderweitig gehandhabt wird.

Die Zuführung des vorderen Zopfendes zum Schredder mittels der Fördereinrichtung hat außerdem den Vorteil, dass mittels der Fördereinrichtung die Zufuhrgeschwindigkeit des Zopfes zum Schredder eingestellt werden kann. Somit kann je nach aktueller Auslastung des Schredders das vordere Zopfende schneller oder langsamer dem Schredder zugeführt werden. Eine Überlastung oder Unterlastung des Schredders kann dadurch vermieden werden.

Erfindungsgemäß umfasst die Vorrichtung als Schredder einen 2-Wellen-Schredder. Erfindungsgemäß wurde erkannt, dass sich 2-Wellen-Schredder besonders gut zum Zerkleinern bzw. zum Schreddern von Zöpfen aus einem Stofflöser eignen. Im Vergleich zu einem 1-Wellen-Schredder sind sie normalerweise weniger störungs- und reparaturanfällig, Außerdem kann im Vergleich zu einem 1-Wellen-Schredder ein höherer Durchsatz erreicht und es können auch gröbere Materialen geschreddert werden.

Vorzugsweise weist der 2-Wellen-Schredder zwei, insbesondere gegenläufig, rotierend antreibbare, zumindest im Wesentlichen parallele Wellen mit Schneidelementen zum Schreddern des Zopfs auf. Dabei können die Schneidelemente auf jeder Welle in einer Reihe angeordnet sein. Zwischen benachbarten Schneidelementen einer Welle können Distanzscheiben angeordnet sein, so dass zwischen benachbarten Schneidelementen derselben Welle ein Freiraum entsteht. Die Schneidelemente einer Welle sind vorzugsweise in axialer Richtung gesehen versetzt zu den Schneidelementen der anderen Welle angeordnet, so dass sich die Schneidelemente der einen Welle und die Distanzscheiben der anderen Welle gegenüberstehen. Ein jeweiliges Schneidelement der einen Welle kann somit in einen Freiraum zwischen benachbarten Schneidelementen der anderen Welle eingreifen bzw. den Freiraum durchlaufen, wenn die Wellen rotierend angetrieben werden. Im Betrieb des Schredders laufen die Schneidelemente der beiden Wellen somit in dem zwischen den beiden Wellen liegenden Bereich aneinander vorbei. Dabei wirken aneinander vorbeilaufende Schneidelemente in Art einer Schere zusammen, um die durch den Bereich hindurchgeförderten Materialen in Klein- und Kleinstteile zu durchtrennen.

Im Gegensatz dazu wird bei einem 1-Wellen-Schredder zugeführtes Material zwischen einer Welle und einem festen Stator hindurchgefördert. Die Zerlegung in Kleinteile erfolgt typischerweise dadurch, dass zugeführtes Material am Stator hängen bleibt und die sich drehende Welle das Material auseinanderzieht und somit in Kleinteile zerreißt. Bei einem 1-Wellen-Schredder sind die Schneidelemente normalerweise auch einstückig mit der Welle ausgebildet.

Bei dem 2-Wellen-Schredder können die Schneidelemente von den Wellen demontierbar sein. Die Schneidelemente können somit von der Welle abgenommen und gewartet, insbesondere nachgeschliffen, werden. Die Betriebskosten lassen sich dadurch senken, insbesondere im Vergleich zu einem 1-Wellen-Schredder, bei dem die Schneidelemente in die Welle integriert sind, so dass die komplette Welle ausgetauscht werden muss, sobald die Schneidelemente zerschlissen sind.

Die Schneidelemente können austauschbar sein. Durch Austauschen von Schneidelementen lassen sich unterschiedliche Zerkleinerungsgrade realisieren. Außerdem ist es nicht erforderlich, bei vollständig zerschlissenen Schneidelementen die gesamte Welle auszutauschen. Die Betriebskosten können somit gering gehalten werden.

Es können aber auch die Wellen austauschbar sein. Der Austausch einer kompletten Welle kann verhältnismäßig schnell durchgeführt werden. Standzeiten können somit kurz gehalten werden.

Die Fördereinrichtung kann insbesondere so angeordnet und ausgestaltet sein, dass das vordere Zopfende einem Bereich des Schredders, welcher zwischen den beiden Wellen liegt, zuführbar ist. Das vordere Zopfende kann durch die sich gegenläufig drehenden Wellen in den sogenannten Schredderbereich zwischen den beiden Wellen gezogen und von den Schneidelementen durchtrennt werden.

Der Schredder ist vorzugsweise derart angeordnet, dass die Wellen zumindest im Wesentlichen parallel zu einer Richtung verlaufen, längs der das vordere Zopfende dem Schredder zugeführt wird. Die Längserstreckung des zugeführten vorderen Zopfendes verläuft somit parallel zu den Wellen. Das vordere Zopfende kann somit besonders gut von den gegenläufig rotierenden Wellen erfasst und zum Schreddern in den Schredderbereich gezogen werden.

Für jede Welle kann ein eigener Antrieb, insbesondere elektrischer oder hydraulischer Antrieb, vorgesehen sein, wobei die Antriebe vorzugsweise unabhängig voneinander betreibbar sind. Die Wellen lassen sich daher individuell und unabhängig voneinander betreiben. Insbesondere können die Wellen mit unterschiedlichen Umlaufgeschwindigkeiten betrieben werden. Ferner kann die Umlaufrichtung einer Welle wenigstens kurzzeitig geändert werden, während die Umlaufrichtung der anderen Welle beibehalten wird.

Durch die Verwendung von elektrischen oder hydraulischen Antrieben können leistungsstarke und robuste Antriebe für die Wellen bereitgestellt werden. Ein hydraulischer Antrieb lässt sich kompakt ausgestalten und kann ein verhältnismäßig hohes Drehmoment bereitstellen, welches sich zudem gut kontrollieren bzw. steuern lässt. Ein Elektromotor ist verhältnismäßig günstig und auch leiser als ein Hydraulikantrieb.

Nach einer weiteren bevorzugten Ausgestaltung der Erfindung umfasst die erfindungsgemäße Vorrichtung eine Steuerung für die Fördereinrichtung, wobei die Steuerung dazu ausgebildet ist, die Fördergeschwindigkeit und/oder die Förderrichtung des Zopfs in Abhängigkeit von wenigstens einem Betriebsparameter des Schredders einzustellen. Eine Überlastung oder Unterlastung des Schredders kann durch entsprechende Einstellung der Fördergeschwindigkeit und/oder der Förderrichtung des Zopfs vermieden werden.

Insbesondere kann es vorgesehen sein, dass die Steuerung die Fördergeschwindigkeit des Zopfes primär in Abhängigkeit von wenigstens einem in Bezug zu dem Stofflöser stehenden Parameter einstellt. Der Zopf kann beispielsweise kontinuierlich aus dem Stofflöser gezogen werden, wobei die Fördergeschwindigkeit von der Menge an Material, die sich am Zopf anlagert, abhängig ist. Sekundär können die Fördergeschwindigkeit und/oder eventuell sogar die Förderrichtung des Zopfes in Abhängigkeit von dem Betriebsparameter des Schredders eingestellt werden. Dies kann beispielsweise dadurch realisiert werden, dass anhand des Betriebsparameters des Schredders ein Offsetwert bestimmt wird, um welchen je nach Vorzeichen des Offsetwerts die aktuelle Fördergeschwindigkeit erhöht bzw. erniedrigt wird.

Mit Einstellen der Förderrichtung ist insbesondere gemeint, dass das vordere Ende des Zopfes normalerweise in Richtung des Schredders gefördert wird. Zum Beispiel bei einer starken Überlastung des Schredders kann es ausnahmsweise aber auch vorgesehen sein, dass das vordere Ende des Zopfes zumindest kurzzeitig vom Schredder weggezogen wird, um diesen zu entlasten.

Bei dem Betriebsparameter handelt es sich insbesondere um den hydraulischen Druck des hydraulischen Antriebs des Schredders und/oder um das Drehmoment an einer Welle des Schredders und/oder um einen elektrischen Parameter, insbesondere Strom oder Spannung, des elektrischen Antriebs des Schredders. Durch Messung eines der genannten Betriebsparameter kann auf einfache Weise die momentane Auslastung des Schredders ermittelt werden.

Die Vorrichtung kann eine Messeinrichtung zur Messung des hydraulischen Drucks und/oder zur Messung des Drehmoments und/oder zur Messung des elektrischen Parameters aufweisen. Der von der Messeinrichtung ermittelte Messwert kann der Steuerung für die Fördereinrichtung bereitgestellt werden.

Vorzugsweise weist die Fördereinrichtung eine Winde mit einer antreibbaren Rolle und einer Gegenrolle auf und ist so ausgestaltet, dass der Zopf zwischen der Rolle und der Gegenrolle hindurch gefördert wird. Durch eine derartige Winde kann eine einfache, kostengünstige und robuste Fördereinrichtung für den Zopf bereitgestellt werden.

Bevorzugt umfasst die erfindungsgemäße Vorrichtung einen Stofflöser, wobei die Fördereinrichtung oberhalb des Stofflösers und zwischen dem Stofflöser und dem Schredder angeordnet ist, insbesondere ohne dass zwischen der Fördereinrichtung und dem Schredder eine Schneidvorrichtung, insbesondere Schere oder dergleichen, zur Abtrennung des vorderen Zopfendes vom restlichen Zopf vorgesehen ist.

Bei dem Stofflöser kann es sich insbesondere um einen sog. LC-Pulper oder um einen sogenannten HC-Pulper handeln. HC-Pulper werden normalerweise bei einer Konzentration von ca. 10% +/- 2% an gelösten Stoffen im verwendeten Lösungsmittel, wie etwa Wasser, betrieben. Sie werden zum Beispiel zum Auflösen von braunen Altpapieren verwendet, wie sie in der Herstellung von Kartonanlagen zum Einsatz kommen. LC-Pulper werden demgegenüber bei niedrigeren Konzentrationen von im Lösungsmittel aufgelösten Stoffen betrieben.

Die erfindungsgemäße Vorrichtung kann zwischen der Fördereinrichtung und dem Schredder eine Führungseinrichtung, insbesondere eine Rutsche, zur Führung des vorderen Zopfendes aufweisen. Das vordere Ende des Zopfs kann somit in Richtung Schredder zwangsgeführt sein, um das vordere Zopfende dem Schredder in einer gewünschten Richtung zuzuführen. Beispielweise kann mittels der Führungseinrichtung sichergestellt werden, dass das vordere Zopfende längs einer Richtung zugeführt wird, die sich im Wesentlichen parallel zu den Wellen eines 2-Wellen-Schredders erstreckt.

Die Umlaufgeschwindigkeit und/oder die Umlaufrichtung von wenigstens einer Welle des Schredders können in Abhängigkeit von dem Drehmoment auf die Welle und/oder des Hydraulikdrucks des Antriebs der Welle eingestellt werden. Eine Über- oder Unterlastung des Schredders kann dadurch vermieden werden.

Vorzugsweise ist eine Messeinrichtung zur Messung des Drehmoments und/oder zur Messung des Hydraulikdrucks vorgesehen.

Dem Schredder kann ein weiterer Schredder, insbesondere 2-Wellen-Schredder, nachgeordnet ist. Durch zwei hintereinander angeordnete Schredder kann ein verhältnismäßig hoher Zerkleinerungsgrad für das geschredderte Material erreicht werden.

Die Erfindung betrifft ferner ein Verfahren zum Verarbeiten eines in einem Stofflöser gebildeten Zopfs, insbesondere mittels einer erfindungsgemäßen Vorrichtung, wobei der Zopf mit seinem vorderen Ende voran mittels einer Fördereinrichtung für den Zopf, insbesondere einer Winde, aus dem Stofflöser gezogen wird, und wobei der Zopf mit seinem vorderen Ende voran mittels der Fördereinrichtung direkt einem Schredder zugeführt wird.

Der Zopf wird mit seinem vorderen Ende voran mittels der Fördereinrichtung direkt einem 2-Wellen-Schredder zugeführt.

Vorzugsweise wird wenigstens ein Betriebsparameter des Schredders gemessen und die Fördergeschwindigkeit und/oder die Förderrichtung des Zopfs werden in Abhängigkeit von dem wenigstens einen Betriebsparameter eingestellt. Nachfolgend wird die vorliegende Erfindung beispielhaft unter Bezugnahme auf die Zeichnungen beschrieben. Es zeigen, jeweils schematisch,
- Fig. 1: eine seitliche Ansicht einer erfindungsgemäßen Vorrichtung,
- Fig. 2: eine perspektivische Ansicht der Vorrichtung von Fig. 1,
- Fig. 3: eine perspektivische teilweise Darstellung eines 2-Wellen-Schredders der Vorrichtung von Fig. 1,
- Fig. 4: eine weitere teilweise Darstellung des Schredders von Fig. 3,
- Fig. 5: eine schematische Darstellung zur Erläuterung des Funktionsprinzips des Schredders von Fig. 3 und
- Fig. 6: ein Blockdiagramm der Vorrichtung von Fig. 1.

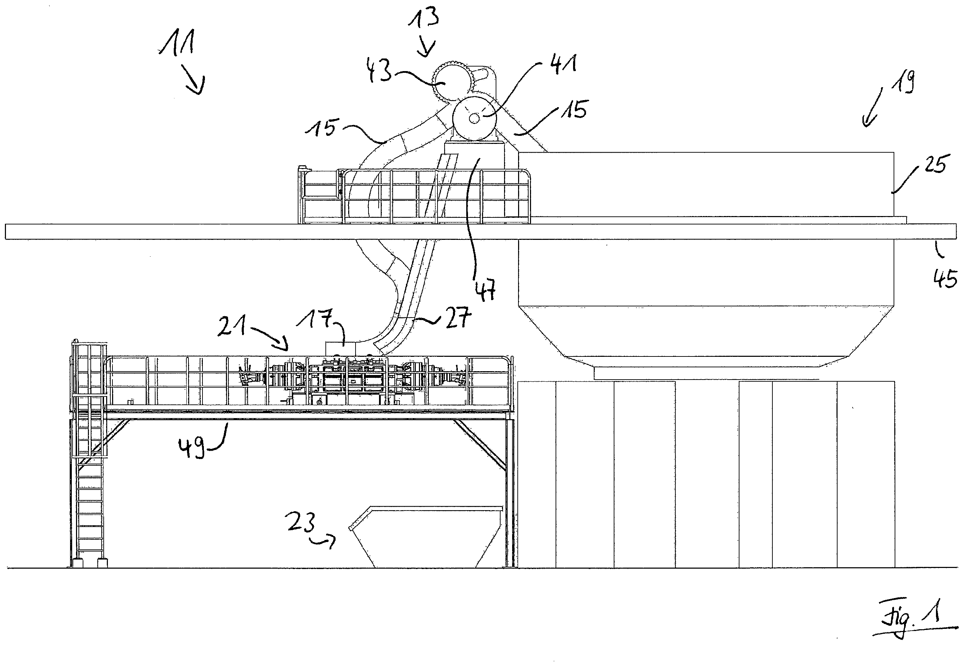

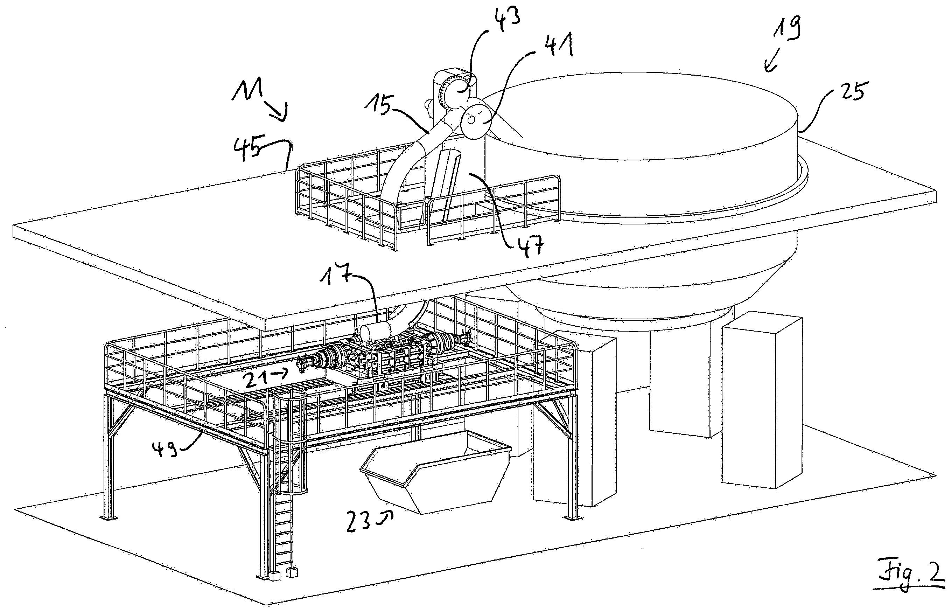

Die in den Figuren 1 und 2 gezeigte Vorrichtung 11 umfasst eine Fördereinrichtung 13 zum Ziehen eines Zopfs 15 mit seinem vorderen Ende 17 voraus aus einem Stofflöser 19. Die Fördereinrichtung 13 ist dabei so angeordnet und ausgestaltet, dass der Zopf 15 mit seinem vorderen Ende 17 voran mittels der Fördereinrichtung 13 direkt einem Schredder 21 zuführbar ist.

Der Stofflöser 19, der auch als Pulper bezeichnet wird, weist einen bottichartigen, oben offenen Behälter 25 auf, der mit Wasser gefüllt ist und in den das zum Auflösen vorgesehene Material, wie etwa Altpapier, Zellstoff, Karton oder Pappe eingebracht und mit dem Wasser intensiv vermischt wird, um es aufzulösen. Dabei kann zum Vermischen ein am Boden des Behälters angeordneter Misch- und Zerkleinerungsrotor (nicht gezeigt) zum Einsatz kommen.

Wie die Figuren 1 und 2 zeigen, hängt der Zopf 15 in den Behälter hinein. Bei dem Zopf 15 handelt es sich um ein seilartiges Drahtbündel, an dem sich vor allem grobe, nicht lösliche Verunreinigungen, wie beispielsweise Folien, Packbänder oder Textilreste, verspinnen.

Die Fördereinrichtung 13 ist als Winde ausgebildet und umfasst eine angetriebene Rolle 41 und eine Gegenrolle 43, wobei der Zopf 15 zwischen der Rolle 41 und der Gegenrolle 43 hindurchgefördert wird.

Wie die Figuren 1 und 2 außerdem zeigen, ist die Fördereinrichtung 13 oberhalb des Stofflösers 19 angeordnet und - zumindest in funktioneller Hinsicht - zwischen dem Stofflöser 19 und dem Schredder 21, so dass das vordere Zopfende 17 mittels der Fördereinrichtung 13 nicht nur aus dem Stofflöser 19 gezogen, sondern auch dem Schredder 21 zugeführt werden kann.

Bei der in den Figuren 1 und 2 dargestellten Vorrichtung 11 ist eine obere Plattform 45 vorgesehen, durch die der Behälter 25 hindurchragt. Die Fördereinrichtung 13 ist auf einem Sockel 47 angeordnet, der auf der oberen Plattform 45 steht. Die Fördereinrichtung 13 befindet sich dabei seitlich neben und oberhalb der Behälteröffnung, um den Zopf 15 aus dem Behälter 25 herausziehen zu können.

Der Schredder 21 ist auf einem Gestell 49 unterhalb der Plattform 45 angeordnet. Das unten aus dem Schredder 21 herausfallende, geschredderte Material fällt in einen unterhalb des Schredders 21 bzw. unterhalb des Gestells 49 aufgestellten Container 23.

Die Fördergeschwindigkeit, mit der die Fördereinrichtung 13 den Zopf 15 aus dem Behälter zieht, kann derart eingestellt werden, dass ein vernünftiges Anspinnen von Verschmutzungen an dem Zopf möglich wird, ohne dass der Zopf 15 zu groß wird. Die Fördergeschwindigkeit kann somit primär mit dem Anspinnen von Material am Zopf 15 im Stofflöser 19 in Zusammenhang stehen.

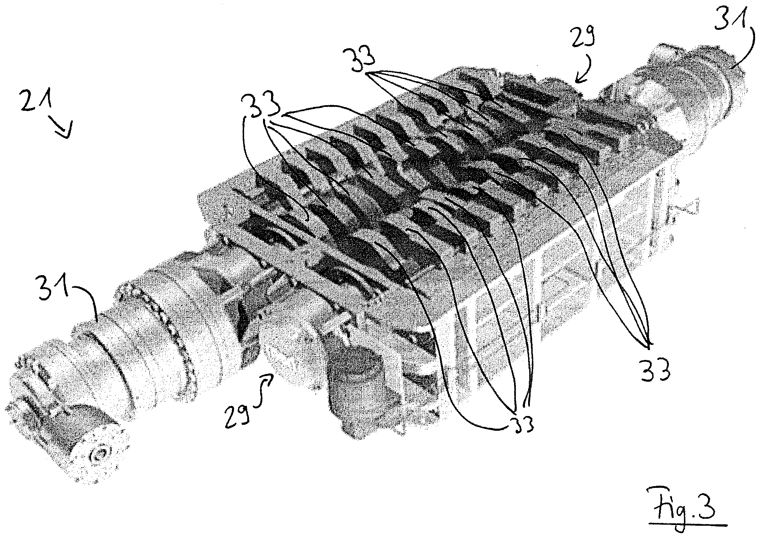

Zwischen der Fördereinrichtung 13 und dem Schredder 21 ist eine in Form einer Rutsche ausgebildete Führungseinrichtung 27 angeordnet, die die Zuführung des vorderen Zopfendes 17 zum Schredder unterstützt, und zwar so, dass das vordere Zopfende 17 zumindest im Wesentlichen parallel zu zwei parallel verlaufenden Wellen 29 des Schredders 21 (vgl. Fig. 3) zugeführt wird.

Der Schredder 21 ist somit als 2-Wellen-Schredder ausgebildet. Jeder Welle 29 ist ein eigener hydraulischer Antrieb 31 zugeordnet, der die jeweilige Welle 29 rotierend antreiben kann. Alternativ kann der Antrieb 31 auch als elektrischer Antrieb ausgestaltet sein.

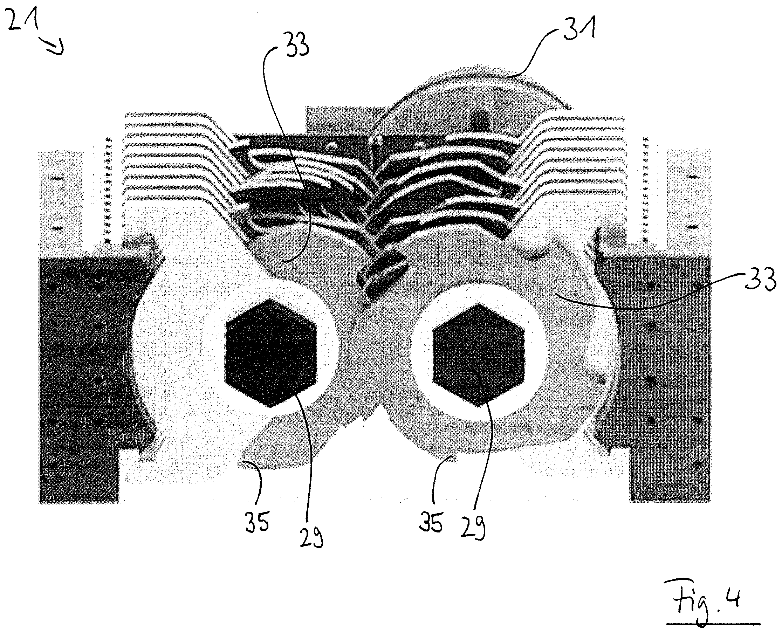

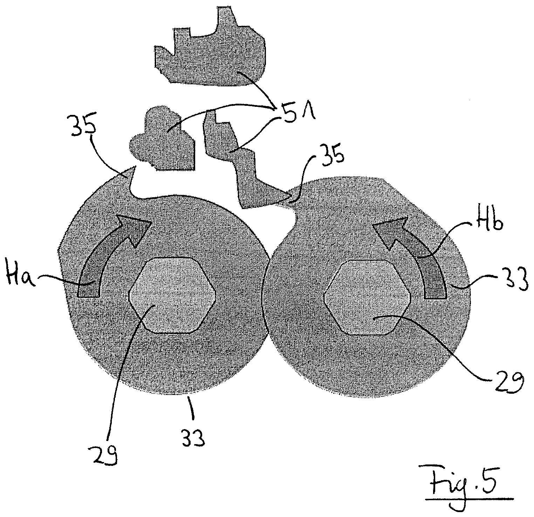

Auf jeder Welle 29 des Schredders 21 sind Schneidelemente 33 angeordnet, wobei zwischen benachbarten Schneidelementen 33 einer Welle jeweils wenigstens eine Distanzscheibe angeordnet ist. Benachbarte Schneidelemente 33 einer Welle sind somit voneinander beabstandet. Die Schneidelemente 33 der beiden Wellen 29 sind in axialer Richtung gesehen versetzt zueinander angeordnet, so dass ein jeweiliges Schneidelement 33 einer Welle einer jeweiligen Distanzscheibe der anderen Welle gegenübersteht. Die Schneidelemente 33 der einen Welle 29 greifen somit in die mittels der Distanzscheiben der anderen Welle 29 geschaffenen Freiräume ein. Wie die Querschnittsansichten der Fig. 4 und 5 zeigen, überlappt somit die Querschnittsfläche eines Schneidelements 33 der einen Welle 29 mit der Querschnittsfläche des benachbarten Schneidelements 33 der anderen Welle 29 im Bereich zwischen den beiden Wellen 29. Bei sich gegenläufig drehenden Wellen 29 laufen die Schneidelemente 33 der beiden Wellen 29 somit aneinander vorbei und durchtrennen bzw. schreddern dabei Material 51 (vgl. Fig. 5), das zwischen den beiden Wellen 29 hindurchgefördert wird.

Jedes Schneidelement 33 weist an seinem Außenumfang wenigstens einen hakenartigen Vorsprung 35 auf, dessen Spitze in Richtung der jeweiligen Hauptumlaufrichtung der jeweiligen Welle 29 gerichtet ist. Wie Fig. 5 anhand der Pfeile zeigt, verläuft die Hauptumlaufrichtung Ha für die linke Welle 29 im Uhrzeigersinn, während die Hauptumlaufrichtung Hb für die rechte Welle 29 entgegengesetzt zum Uhrzeigersinn verläuft.

Wenn die Wellen 29 in ihrer jeweiligen Hauptumlaufrichtung Ha, Hb gegenläufig umlaufen, kann das zugeführte Material 51, insbesondere mittels wenigstens eines Vorsprungs 35, von den Wellen 29 erfasst und in den Schredderbereich zwischen den beiden Wellen 29 gezogen und geschreddert werden.

Aufgrund der separaten Antriebe 31 für die Wellen 29 kann die Umlaufrichtung Ha, Hb wenigstens einer Welle 29 kurzzeitig umgekehrt werden. Dies kann insbesondere erfolgen, wenn kurzzeitig sehr viel Material 51 zugeführt wird. Durch Umkehrung der Umlaufrichtung kann das Material 51 aus dem Schredderbereich zwischen den beiden Wellen 29 nach oben gefördert werden, um den Schredder 21 zu entlasten.

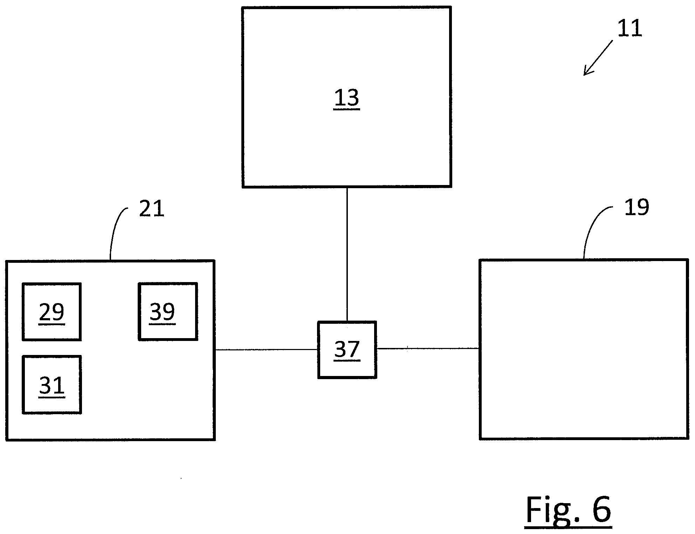

Mittels einer Steuerung 37 (vgl. Fig. 6) für die Fördereinrichtung 13 kann die Fördergeschwindigkeit des Zopfes 15 ferner in Abhängigkeit von einem Betriebsparameter des Schredders 21 einstellt werden. Dadurch können beispielsweise eine Über- und Unterlastung des Schredders 21 vermieden werden.

Bei dem Betriebsparameter kann es sich beispielsweise um den hydraulischen Druck eines der hydraulischen Antriebe 31 für die Wellen 29 oder um das Drehmoment an einer der Wellen 29 handeln. Zur Messung des Drehmoments bzw. des hydraulischen Drucks kann im Schredder 21 eine Messeinrichtung 39 angeordnet sein, welche einen entsprechenden Messwert an die Steuerung 37 liefert.

Wenn beispielsweise der hydraulische Druck oder das Drehmoment einen bestimmten, vorgegebenen Schwellwert überschreitet, kann dies als Anzeichen dafür gewertet werden, dass der Schredder 21 stark belastet ist. Daraufhin kann die Steuerung 37 durch entsprechende Ansteuerung der Fördereinrichtung 13 die Fördergeschwindigkeit des Zopfs 15 reduzieren. In Ausnahmefällen kann die Förderrichtung des Zopfes 15 auch umgekehrt werden, um das vordere Ende 17 des Zopfes 15 aus dem Schredder 21 zu ziehen. Wenn demgegenüber der gemessene hydraulische Druck oder das gemessene Drehmoment einen weiteren vorgegebenen, niedrigeren Schwellwert unterschreitet, kann dies als Anzeichen dafür gewertet werden, dass der Schredder 21 unterlastet ist. Die Fördergeschwindigkeit des Zopfes 15 kann durch entsprechende Ansteuerung der Fördereinrichtung 13 sodann erhöht werden.

Dem Schredder 21 kann ein weiterer, zweiter Schredder nachgeordnet sein (nicht gezeigt), um die mittels des Schredders 21 zerkleinerten Teile noch weiter zu zerkleinern.

### Bezugszeichenliste

- 11: Vorrichtung
- 13: Fördereinrichtung
- 15: Zopf
- 17: vorderes Zopfende
- 19: Stofflöser
- 21: Schredder
- 23: Container
- 25: Behälter
- 27: Führungseinrichtung
- 29: Welle
- 31: Antrieb
- 33: Schneidelement
- 35: Vorsprung
- 37: Steuerung
- 39: Messgerät
- 41: Rolle
- 43: Gegenrolle
- 45: Plattform
- 47: Sockel
- 49: Gestell
- 51: Material
- Ha: Hauptumlaufrichtung
- Hb: Hauptumlaufrichtung

## Patentansprüche

1. Vorrichtung zum Verarbeiten eines in einem Stofflöser (19) gebildeten Zopfs (15) mit einer Fördereinrichtung (13), insbesondere Winde, zum Ziehen des Zopfs (15) mit seinem vorderen Ende (17) voran aus dem Stofflöser (19) und einem Schredder (21), **dadurch gekennzeichnet, dass** die Fördereinrichtung (13) so angeordnet und ausgestaltet ist, dass der Zopf (15) mit seinem vorderen Ende (17) voran mittels der Fördereinrichtung (13) direkt dem Schredder (21) zuführbar ist, der ein 2-Wellen-Schredder ist.

2. Vorrichtung nach Anspruch 1,
**dadurch gekennzeichnet, dass**
der 2-Wellen-Schredder (21) zwei, insbesondere gegenläufig, rotierend antreibbare, zumindest im Wesentlichen parallele Wellen (29) mit Schneidelementen (33) zum Schreddern des Zopfs (15) aufweist.

3. Vorrichtung nach Anspruch 2,
**dadurch gekennzeichnet, dass**
die Schneidelemente (33) von den Wellen (29) demontierbar und/oder austauschbar sind, und/oder
dass die Wellen (29) des Schredders (21) austauschbar sind.

4. Vorrichtung nach zumindest einem der vorhergehenden Ansprüche,
**dadurch gekennzeichnet, dass**
das vordere Zopfende (17) einem Bereich des Schredders (21), welcher zwischen den beiden Wellen (29) liegt, zuführbar ist, und/oder
der Schredder (21) derart angeordnet ist, dass die Wellen (29) zumindest im Wesentlichen parallel zu einer Richtung verlaufen, längs der das vordere Zopfende (17) dem Schredder (21) zugeführt wird.

5. Vorrichtung nach zumindest einem der vorhergehenden Ansprüche,
**dadurch gekennzeichnet, dass**
für jede Welle (29) ein eigener Antrieb (31), insbesondere elektrischer oder hydraulischer Antrieb, vorgesehen ist, wobei, bevorzugt, die Antriebe (31) unabhängig voneinander betreibbar sind.

6. Vorrichtung nach zumindest einem der vorhergehenden Ansprüche,
**dadurch gekennzeichnet, dass**
diese eine Steuerung (37) für die Fördereinrichtung (13) aufweist, wobei die Steuerung (37) dazu ausgebildet ist, die Fördergeschwindigkeit und/oder die Förderrichtung des Zopfs (15) in Abhängigkeit von wenigstens einem Betriebsparameter des Schredders (21) einzustellen.

7. Vorrichtung nach Anspruch 6,
**dadurch gekennzeichnet, dass**
es sich bei dem Betriebsparameter um den hydraulischen Druck des hydraulischen Antriebs (31) des Schredders (21) und/oder um das Drehmoment an einer Welle (29) des Schredders (31) und/oder um einen elektrischen Parameter, insbesondere Strom oder Spannung, des elektrischen Antriebs (31) des Schredders (21) handelt.

8. Vorrichtung nach Anspruch 7,
**dadurch gekennzeichnet, dass**
diese eine Messeinrichtung (39) zur Messung des hydraulischen Drucks und/oder zur Messung des Drehmoments und/oder zur Messung des elektrischen Parameters aufweist.

9. Vorrichtung nach zumindest einem der vorhergehenden Ansprüche,
**dadurch gekennzeichnet, dass**
die Fördereinrichtung (13) eine Winde mit einer antreibbaren Rolle und einer Gegenrolle aufweist und so ausgestaltet ist, dass der Zopf (15) zwischen der Rolle und der Gegenrolle hindurch gefördert wird.

10. Vorrichtung nach zumindest einem der vorhergehenden Ansprüche,
**dadurch gekennzeichnet, dass**
diese ferner einen Stofflöser (19) umfasst, wobei die Fördereinrichtung (13) oberhalb des Stofflösers (19) und zwischen dem Stofflöser (19) und dem Schredder (21) angeordnet ist, insbesondere ohne dass zwischen der Fördereinrichtung (13) und dem Schredder (21) eine Schneidvorrichtung, insbesondere Schere oder dergleichen, zur Abtrennung des vorderen Zopfendes (17) vom restlichen Zopf (15) vorgesehen ist.

11. Vorrichtung nach zumindest einem der vorhergehenden Ansprüche,
**dadurch gekennzeichnet, dass**
diese zwischen der Fördereinrichtung (13) und dem Schredder (21) eine Führungseinrichtung (27), insbesondere eine Rutsche, zur Führung des vorderen Zopfendes (17) aufweist.

12. Vorrichtung nach zumindest einem der vorhergehenden Ansprüche,
**dadurch gekennzeichnet, dass**
die Umlaufgeschwindigkeit und/oder die Umlaufrichtung von wenigstens einer Welle (29) des Schredders (21) in Abhängigkeit von dem Drehmoment auf die Welle (29) und/oder des Hydraulikdrucks des Antriebs (31) der Welle (29) eingestellt wird, wobei, bevorzugt, eine Messeinrichtung (39) zur Messung des Drehmoments und/oder zur Messung des Hydraulikdrucks vorgesehen ist.

13. Vorrichtung nach zumindest einem der vorhergehenden Ansprüche,
**dadurch gekennzeichnet, dass**
dem Schredder (21) ein weiterer Schredder, insbesondere 2-Wellen-Schredder, nachgeordnet ist.

14. Verfahren zum Verarbeiten eines in einem Stofflöser (19) gebildeten Zopfs (15), insbesondere mittels einer Vorrichtung (11) nach zumindest einem der vorhergehenden Ansprüche, wobei der Zopf (15) mit seinem vorderen Ende (17) voran mittels einer Fördereinrichtung (13) für den Zopf (15), insbesondere einer Winde, aus dem Stofflöser (19) gezogen wird,
**dadurch gekennzeichnet, dass**
der Zopf (15) mit seinem vorderen Ende (17) voran mittels der Fördereinrichtung (13) direkt einem 2-Wellen-Schredder (21) zugeführt wird.

## Claims

1. Device for processing a rope (15) formed in a pulper (19), by a conveyor (13), in particular a winch, for pulling the rope (15) with its front end (17) ahead out of the pulper (19) and a shredder
**characterized in that**
the conveyor (13) is arranged and designed such that the rope (15) with its front end (17) ahead is directly introducible into the shredder (21) by means of the conveyor (13), wherein said shredder (21) is a two-shaft shredder.

2. Device according to claim 1, **characterized in that** the two-shaft shredder (21) comprises two rotary-driven at least essentially parallel shafts (29), in particular counter-rotating, with cutting elements (33) to shred the rope (15).

3. Device according to claim 2, **characterized in that** the cutting elements (33) are detachable from the shafts (29) and/or exchangeable and/or
the shafts (29) of the shredder (21) are exchangeable.

4. Device according to at least any one of the preceding claims, **characterized in that** the rope front end (17) is introducible into an area of the shredder (21), which is located in between the two shafts (29) and/or
the shredder (21) is arranged such that the shafts (29) are oriented at least essentially parallel to a direction, along which the rope front end (17) is introduced into the shredder (21).

5. Device according to at least any one of the preceding claims, **characterized in that** each shaft (29) is provided with an individual drive (31), in particular with an electrical drive or with a hydraulic drive, the drives (31), preferably, being actuated independently.

6. Device according to at least any one of the preceding claims, **characterized in that** it comprises a controller (37) for the conveyor (13), wherein the controller (37) is designed for adjusting the conveying speed and/or the conveying direction of the rope (15) in dependence of at least one operating parameter of the shredder (21).

7. Device according to claim 6, **characterized in that** the operating parameter is the hydraulic pressure of the hydraulic drive (31) of the shredder (21) and/or the torque at one shaft (29) of the shredder (21) and/or an electrical parameter in particular current or voltage of the electrical drive (31) of the shredder (21).

8. Device according to claim 7, **characterized in that** it comprises a measuring device (39) for measuring the hydraulic pressure and/or for measuring the torque and/or for measuring the electrical parameter.

9. Device according to at least any one of the preceding claims, **characterized in that** the conveyor (13) comprises a winch with a drivable roll and a counter roller and is designed such that the rope (15) is transported in between the roll and the counter roller.

10. Device according to at least any one of the preceding claims, **characterized in that** it further comprises a pulper (19), wherein the conveyor (13) is arranged above the pulper (19) and between the pulper (19) and the shredder (21), in particular without providing a cutting device, especially scissors or the like, in between the conveyor (13) and the shredder (21) for cutting off the rope front end (17) from the remaining rope (15).

11. Device according to at least any one of the preceding claims, **characterized in that** it comprises in between the conveyer (13) and the shredder (21) a guidance device (27), especially a slide, for guidance of the rope front end (17).

12. Device according to at least any one of the preceding claims, **characterized in that** the rotational speed and/or the direction of rotation of at least one shaft (29) of the shredder (21) is adjusted depending on the torque on the shaft (29) and/or on the hydraulic pressure of the drive (31) of shaft (29), with preferably providing a measuring device (39) for measuring the torque and/or for measuring the hydraulic pressure.

13. Device according to at least any one of the preceding claims, **characterized in that** an additional shredder, especially a two-shaft shredder is subordinate to the shredder (21).

14. Method for processing a rope (15) formed in a pulper (19), especially by means of a device (11) according to at least any one of the preceding claims, with the rope (15) with its front end (17) ahead being pulled out of the pulper (19) by means of a conveyer (13) for the rope (15), especially a winch,
**characterized in that**
the rope (15) with its front end (17) ahead is directly introduced into a two-shaft shredder (21) by means of the conveyor (13).

## Revendications

1. Dispositif pour traiter une tresse (15) formée dans un broyeur (19) avec un convoyeur (13), notamment un treuil, pour tirer la tresse (15) par son bout antérieur (17) en avant du broyeur (19), et une déchiqueteuse,
**charactérisé en ce que**
le convoyeur (13) est agencé et conçu de telle façon, que la tresse (15) par son bout antérieur (17) en avant pouvant être amenée par le biais du convoyeur (13) directement à la déchiqueteuse (21), ladite déchiqueteuse (21) étant une déchiqueteuse à deux arbres.

2. Dispositif selon la revendication 1, **charactérisé en ce que** la déchiqueteuse à deux arbres (21) est munie des arbres à entraînement rotatif (29), notamment à entraînement rotatif opposé, orientés au moins essentiellement parallèles, ces deux arbres (21) étant munis d'éléments de coupe (33) pour déchirer la tresse (15).

3. Dispositif selon la revendication 2, **charactérisé en ce que** les éléments de coupe (33) sont remplaçable et/ou apte à être démontés des arbres (29) et/ou les arbres (29) de la déchiqueteuse (21) sont remplaçables.

4. Dispositif selon au moins une quelconque des revendications précédentes, **charactérisé en ce que** le bout antérieur de tresse (17) pouvant être amené à une zone de la déchiqueteuse (21) qui se situe entre les deux arbres (29) et/ou la déchiqueteuse (21) est agancée de telle façon que les arbres (29) sont orientés au moins essentiellement parallèles à une direction, le long de laquelle le bout antérieur de tresse (17) est amené à la déchiqueteuse (21).

5. Dispositif selon au moins une quelconque des revendications précédentes, **charactérisé en ce que** chaque arbre (29) est muni d'un entraînement individuel (31), notamment d'un entraînement électrique ou hydraulique, les entraînements (31) préférentiellement étant utilisable de façon indépendante.

6. Dispositif selon au moins une quelconque des revendications précédentes, **charactérisé en ce que** il est muni d'une commande (37) pour le convoyeur (13), la commande (37) étant conçue de façon à ajuster la vitesse de convoyage et/ou la direction de convoyage de la tresse (15) en fonction d'au moins un paramètre de fonctionnement de la déchiqueteuse (21).

7. Dispositif selon la revendications 6, **charactérisé en ce que** le paramètre de fonctionnement signifie la pression hydraulique de l'entraînement hydraulique (31) de la déchiqueteuse (21) et/ou le couple d'un arbre (29) de la déchiqueteuse (21) et/ou un paramètre électrique, notamment le courant ou la tension électrique, de l'entraînement électrique (31) de la déchiqueteuse (21).

8. Dispositif selon la revendications 7, **charactérisé en ce que** il est muni d'un instrument de mesure (39) pour mesurer la pression hydraulique et/ou pour mesurer le couple et/ou pour mesurer le paramètre électrique.

9. Dispositif selon au moins une quelconque des revendications précédentes, **charactérisé en ce que** le convoyeur (13) est muni d'un treuil comportant une bobine apte à être entraînée et un contre-rouleau, ledit convoyeur (13) étant conçu de telle façon, que la tresse (15) est transportée entre la bobine et le contre-rouleau.

10. Dispositif selon au moins une quelconque des revendications précédentes, **charactérisé en ce qu'**en outre il est muni d'un broyeur (19), le convoyeur (13) étant agencé au-dessus du broyeur (19) et entre le broyeur (19) et la déchiqueteuse (21), notamment sans prévoir un dispositif de coupe entre le convoyeur (13) et la déchiqueteuse (21), en particulier une cisaille ou similaire, pour découper le bout antérieur de tresse (17) de la tresse résiduaire (15).

11. Dispositif selon au moins une quelconque des revendications précédentes, **charactérisé en ce que** il est muni d'un dispositif de guidage (27), notamment un glissoir, situé entre le convoyeur (13) et la déchiqueteuse (21), pour guider le bout antérieur de tresse (17).

12. Dispositif selon au moins une quelconque des revendications précédentes, **charactérisé en ce que** la vitesse de rotation et/ou le sens de rotation d'au moins un arbre (29) de la déchiqueteuse (21) est réglé en fonction du couple sur l'arbre (29) et/ou en fonction de la pression hydraulique de l'entraînement (31) de l'arbre (29), de préférence un instrument de mesure (39) est muni, pour mesurer le couple et/ou pour mesurer la pression hydraulique.

13. Dispositif selon au moins une quelconque des revendications précédentes, **charactérisé en ce qu'**une déchiqueteuse supplémentaire, notamment une déchiqueteuse à deux arbres, est agencée en aval de la déchiqueteuse (21).

14. Procédé pour traiter une tresse (15) formée dans un broyeur (19), notamment avec un dispositif (11) selon au moins une quelconque des revendications précédentes, dont la tresse (15) par son bout antérieur (17) en avant est retirée du broyeur (19) par le biais d'un convoyeur (13) pour la tresse (15), notamment par un treuil,
**charactérisé en ce que**
la tresse (15) par son bout antérieur (17) en avant est directement amenée par le biais d'un convoyeur (13) à une déchiqueteuse à deux arbres (21).
